(19) Europäisches Patentamt
European Patent Office
Office européen des brevets

(11) **EP 4 205 891 A1**

(12) **EUROPEAN PATENT APPLICATION**

(43) Date of publication:
**05.07.2023 Bulletin 2023/27**

(21) Application number: **22217345.2**

(22) Date of filing: **30.12.2022**

(51) International Patent Classification (IPC):
**B23C 5/20** (2006.01)

(52) Cooperative Patent Classification (CPC):
**B23C 5/202;** B23C 2200/205; B23C 2200/208;
B23C 2210/287; B23C 2210/325; B23C 2220/28

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.12.2021 IT 202100033122**

(71) Applicant: **FIUDI S.r.l.**
**10098 Rivoli (TO) (IT)**

(72) Inventors:
• **CATALDI, Emilio**
  **10098 RIVOLI (TO) (IT)**
• **PANEGHINI, Paolo**
  **10098 RIVOLI (TO) (IT)**

(74) Representative: **Robba, Pierpaolo**
**Interpatent S.R.L.**
**Via Caboto, 35**
**10129 Torino (IT)**

(54) **SCRAPER INSERT FOR A SMOOTHING ROTARY MILLING CUTTER**

(57) Scraper insert (11) for a smoothing rotary milling cutter for machining metal materials by stock removal, said scraper insert comprising a scraper section (13) proximal to the radial periphery of the body of the scraper insert (11) when said insert is held by the head (41) of the milling cutter, a cutting element (15) adjacent to said scraper section (13) and distal to said periphery of the body of the scraper insert (11) being provided in said scraper insert.

Fig. 1a

Fig. 1b

Fig. 1c

## Description

*Technical Field*

The invention relates to a scraper insert for a smoothing rotary milling cutter. More particularly, the invention relates to a scraper insert arranged to be incorporated, either removably or permanently, in a head of a milling cutter for machining metal materials by stock removal.

*Background Art*

All the surfaces of physical objects are usually subject to micro-geometrical irregularities referred to as rugosities. These irregularities may either be random (typical of workpieces obtained by casting) or have preferential patterns (a frequent case in workpieces machined with machine tools, for example, rotary milling cutters).

Surface roughness is measured by imagining cutting the surface along a plane called relief plane orthogonal to the surface itself. The effective profile is the line resulting from the intersection of the real surface with the relief plane.

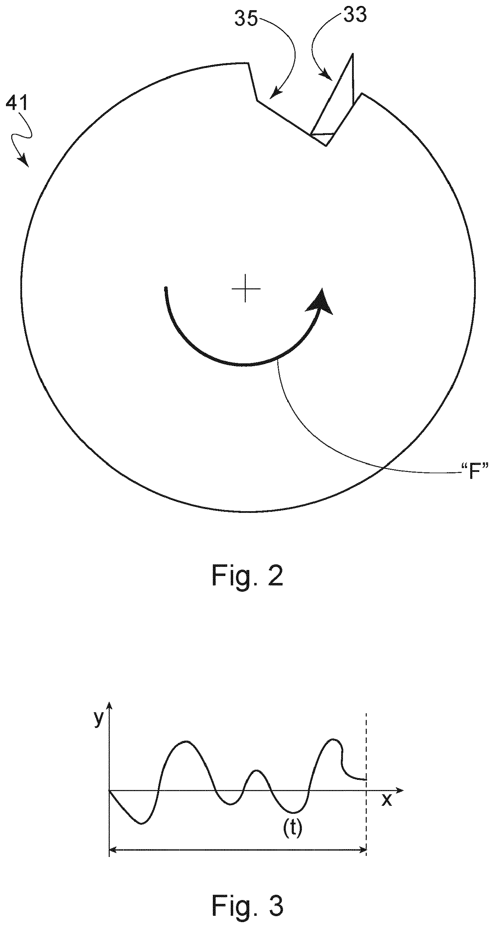

In practice, surface irregularities or rugosities are measured by using a precision instrument called roughness meter. This instrument, by recording the irregularities of the surface, allows to obtain a profile of the type illustrated in the annexed Fig.3, which reproduces the effective profile of the surface roughness in an exemplary case. The roughness parameters most widely known and used in mechanical machining are the parameters of amplitude, roughness Ra, Rq (Rms), Rt, Rz, whose numerical values are expressed in microns. These parameters are international reference standards, adopted to verify compliance of an object with the main roughness regulations, tolerances and processing guidelines.

The roughness parameter Rz is defined as the distance between two straight lines parallel to the mean line of the profile, drawn at a distance equal to the mean of the five highest peaks and the mean of the five lowest valleys in the interval of the base length "L", where the mean line of the profile corresponds to the line for which the sum of the squared distances of the points of the profile from the line itself is minimum. The formula adopted for the calculation of the roughness Rz is therefore:

$$R_z = \frac{\sum_{i=1}^{5} y_i - \sum_{i'=1}^{5} y_{i'}}{5}$$

where y1, y2, y3, y4, y5 are the ordinates of the five highest peaks and y 1', y2', y3', y4', y5' are the ordinates of the five lowest valleys.

Roughness is extremely important for surfaces involved in sliding contacts. This type of surface is known as a bearing surface and according to its application it must have a specific roughness.

To give the surface of a workpiece certain roughness characteristics, a smoothing operation is usually performed. To give the surface of a workpiece certain roughness characteristics, a smoothing operation is usually performed.

As is known, smoothing is one of the most common milling operations performed on metal materials and can be obtained by using a wide range of tools.

In the field of mechanical machining, both for finishing and roughing, with material removal, milling cutters are known equipped with interchangeable inserts to which a cutting element is associated which performs the machining.

The milling cutter is generally made up of an elongated cylindrical body having an end arranged to be associated with the shaft of a tool, for example the drill of a numerically controlled machine for mechanically machining metal components. During machining, the milling cutter is rotated at high speed by means of the tool and the cutting edge associated with each insert of the milling cutter performs the desired mechanical machining.

For the surface finishing of surfaces of metal workpieces, special so-called scraper inserts are often used.

Generally, the scraper insert protrudes in the axial direction by a few hundredths of a mm compared to the lowest, i.e., the least protruding, insert mounted on the milling cutter head and has a cutting edge which allows to carry out surface finishing.

In the field of mechanical smoothing operations, one of the problems that needs to be solved is how to obtain a machined surface, with the desired roughness parameters or, in any case, with roughness parameters that are as close as possible to those required for the workpiece being machined.

An example of a milling cutter having a plurality of cutting inserts removably mounted in a milling cutter body is disclosed in GB 1405248A. One of the inserts of the milling cutter is a scraper insert which extends further out of the body in an axial direction than the other inserts and is housed in an insert-holder adjustably mounted in the body of the milling cutter, for example, in a radial seat thereof. The insert-holder is pivotable about a fulcrum and can be locked in a fixed position by means of an accessible locking screw.

JP2002254233A describes an example of a scraper insert for a smoothing rotary milling cutter for machining metal materials by stock removal, said scraper insert comprising a scraper section which is in a position proximal to the periphery of the body of the scraper insert when the insert is held by the head of a smoothing milling cutter, in which insert a cutting element adjacent to the scraper section and distal to said periphery of the body of the scraper insert is provided.

The results obtained with the known means of the above-mentioned type for smoothing metal surfaces by means of rotary milling cutters are, however, unsatisfactory, and the need for scraper inserts with improved performance is still very much felt today.

A first problem that the invention aims to solve is therefore that of providing a scraper insert for a smoothing rotary milling cutter for machining metal materials by stock removal, which does not have the limits of prior art and which allows to obtain Rz surface roughness parameters better than those obtainable with the inserts currently in use.

A second object of the invention is to provide a scraper insert that is easy to manufacture and can be quickly replaced in the head of the milling cutter.

A further object of the invention is to provide a smoothing milling cutter capable of reaching improved surface roughness parameters Rz.

Last but not least object of the invention is to provide a scraper insert and a smoothing milling cutter which can be manufactured at low cost and are therefore suitable for large-scale industrial production.

These and other objects are achieved with the scraper insert as claimed in the appended claims for a smoothing rotary milling cutter for machining metal materials by stock removal.

*Disclosure of the Invention*

The scraper insert according to the invention can be mounted in a head of a smoothing rotary milling cutter for machining metal materials by stock removal.

The body of the scraper insert according to the invention is preferably made of a hard metal or steel.

The cutting edge of the scraper insert may be made of any suitable material such as, for example, CBN (Cubic Boron Nitride) and PCD (PolyCrystalline Diamond, sintered diamond).

In addition, the scraper insert may advantageously be incorporated in a removable insert-holder either in a permanent manner, for example by braze welding, or in a reversible manner, for example by means of a screw fastening system.

The insert holder may in turn be housed in the head of the rotary milling cutter in a prior art manner.

Typically, the head of a smoothing rotary milling cutter is equipped with a plurality of insert-holders, each housed in a respective seat arranged along the periphery of the body of the head of the milling cutter.

According to the invention, at least one of the insert-holders mounted to the head of the milling cutter incorporates an insert made according to the present invention, to confer the desired roughness by means of the machining carried out by the milling cutter on a workpiece of metal material, for example, cast iron, steel, or aluminum.

The scraper insert made according to a preferred embodiment of the invention essentially comprises a cutting edge in which a scraper section is defined, arranged in a region proximal to the radial periphery of the body of the scraper insert when said insert is held by a milling cutter head, and a cutting element, arranged adjacent to the scraper section and distal to the radial periphery of the body of the scraper insert.

The radial periphery of the body of the scraper insert corresponds to the portion of the body of the insert that is radially distal to the rotation axis of the milling cutter, when the insert is housed in the head of the milling cutter. Furthermore, the body of the insert is substantially flat and extends over a plane lying substantially parallel to the rotation axis of the milling cutter, when the insert is housed in the head of the milling cutter.

The cutting edge is preferably obtained as a cutting bit braze-welded to the body of the insert. In some applications, the cutting bit can be attached, preferably still by braze-welding, directly to the body of the milling cutter.

According to the invention, the cutting element protrudes, i.e., extends in height, from the scraper profile or scraping surface of the scraper section by a height, or protrusion, "A" between 20 $\mu$m and 30 $\mu$m.

During machining, while the head of the rotary milling cutter is rotating, the cutting element therefore protrudes from the scraper profile of the insert and determines, according to the height "A", the value of the roughness parameter Rz of the surface that has undergone the smoothing machining with the milling cutter holding the scraper insert.

In particular, according to the invention, roughness values Rz at least between 3 $\mu$m and 25 $\mu$m can be obtained.

The scraper section 13 extends over a length "B" between about 750 $\mu$m and 850 $\mu$m and the cutting element 15 is arranged at a distance "C" between about 1300 $\mu$m and 1400 $\mu$m from the periphery of the body of the scraper insert 11.

The scraper section and the cutting element are also preferably separated from each other by an inclined section defining a corresponding recess and extending between the scraper section and the base of the cutting element.

According to the invention, the inclined section may take various configurations, depending on the type of application.

For example, the profile of the inclined section could be variously curved or broken and the cavity could be correspondingly concave or wedge-shaped.

In a preferred embodiment of the invention, the inclined section extends rectilinearly and with an essentially constant slope of a few degrees, typically 2-3°.

The depth of the recess depends on the slope of the inclined section as well as on the shape of the corresponding profile.

According to the invention, the recess has a maximum depth "H" between 30 $\mu$m and 40 $\mu$m relative to the scraper profile of the scraper section.

The recess is formed proximal to the base of the cutting element and has a depth - relative to the maximum height of the cutting element - given by the sum of the values of the parameters "A" + "H".

In an exemplary embodiment of the invention, the parameters A, B, C e H, measured from the peripheral end of the scraper profile, take the following values:

A (protrusion) = 25 $\mu$m;
B (length of the scraping surface) = 800 $\mu$m;
C (distance from the cutting element) = 1350 $\mu$m;
H (depth of the recessed region) = 35 $\mu$m.

The inclined section and the recess generated thereby derive from the machining of the cutting element.

The insert according to a preferred embodiment of the invention further comprises a planar section, parallel to the plane of the scraper section and defined adjacent to the cutting element and distal to the peripheral portion of the body of the scraper insert.

Furthermore, still according to a preferred, though non-exclusive, embodiment of the invention, an inclined sloping section is defined adjacent to the parallel planar section and distal to the periphery of the body of the scraper insert.

Preferably, according to the invention, the cutting element comprises a curved profile in which an angular point, essentially obtained by combining an approximately Gaussian curve-shaped profile on the flank proximal to the scraper section with an approximately exponential, decreasing profile on the opposite flank.

In other embodiments, the profile of the cutting element may take a bell-like shape, or the shape of a Gaussian curve, or a parabolic shape.

The geometry of the profile of the cutting element contributes, together with the parameter of height "A" mentioned before, to determine the roughness value Rz taken by a metal surface machined by means of the scraper insert according to the invention.

In the scraper insert, the scraper section is also preferably joined to the radially peripheral adjacent side of the body of the insert by means of a double chamfer.

Alternatively, the scraper section may be joined to the peripheral adjacent side by a rounded section defining the tip radius of the body of the insert.

In addition, the peripheral side preferably extends perpendicularly to the parallel planar section in the body of the scraper insert.

## Brief Description of Drawings

Some preferred embodiments of the invention will be given by way of non-limiting examples with reference to the annexed drawings, in which:

- Fig.1a is a plan view of the scraper insert for a smoothing rotary milling cutter according to a preferred embodiment of the invention;
- Fig.1b is an enlarged view of a detail of Fig.1a;

- Fig.1c is an enlarged view of a detail of Fig.1a in a variant embodiment;
- Fig.2 is a schematic view of a rotary milling cutter;
- Fig.3 is a roughness diagram.

## Description of a Preferred Embodiment

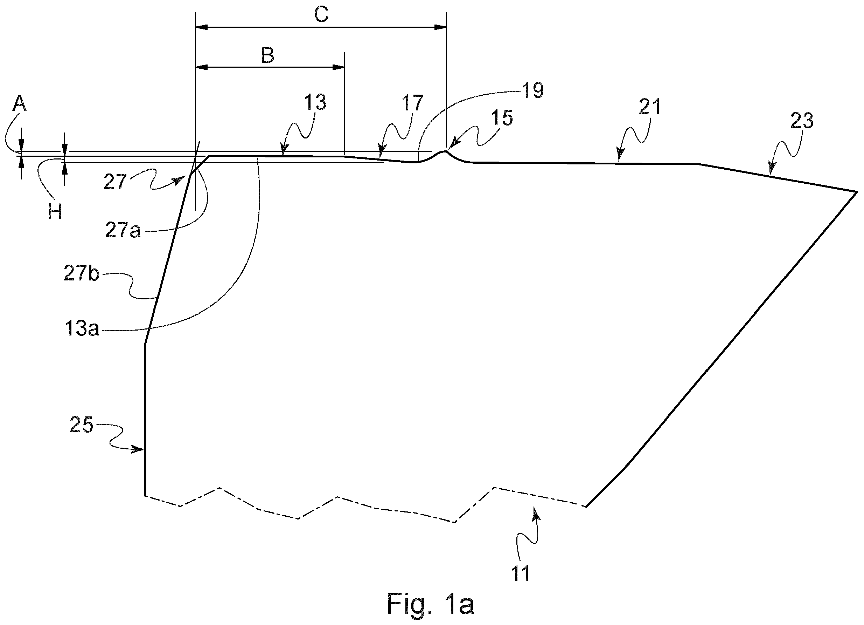

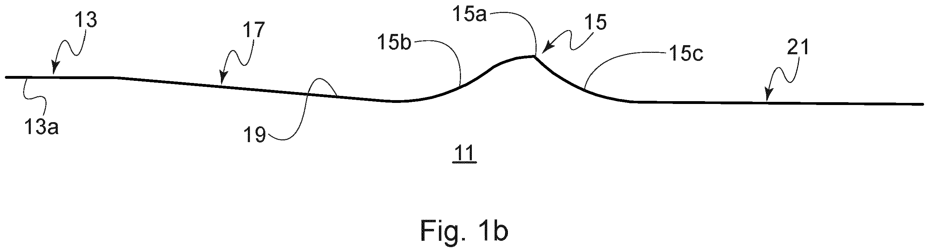

Referring to Figs. 1a and 1b, these show a scraper insert 11, made according to a preferred embodiment of the invention, for a smoothing rotary milling cutter for machining metal materials by stock removal.

The insert 11 comprises a scraper section 13 proximal to the radial periphery of the body of the scraper insert 11, when said insert is held by a head of the milling cutter. The radial periphery of the body of the scraper insert 11 corresponds to the portion of the body of the insert 11 that is radially distal to the axis of rotation of the milling cutter, when the insert 11 is housed in the head of the milling cutter. The body of the insert 11 shown in Figs. 1a and 1b is substantially flat and extends over a plane lying substantially parallel to the rotation axis of the milling cutter, when the insert 11 is housed in the head of the milling cutter. In Figs. 1a and 1b the body of the insert 11 thus extends over a plane substantially parallel to the drawing sheet.

According to the invention, advantageously, the scraper insert 11 comprises a cutting element 15 adjacent to the scraper section 13 and distal to the radial periphery of the body of the scraper insert 11.

In the illustrated embodiment, said cutting element 15 protrudes from the scraper profile 13a of the scraper section 13 by a height "A" of about 25 $\mu$m. The cutting element 15 therefore extends in height with respect to the scraper section, or scraping surface, 13a of the scraper section 13 and determines the roughness parameter Rz of the surface that has undergone the smoothing machining with the scraper insert 11. In the illustrated embodiment, the cutting element 15 also extends essentially over the same plane over which the scraper insert 11 extends.

In the illustrated embodiment, the scraper section 13 extends over a length "B" of approximately 800 $\mu$m and the cutting element 15 is arranged at a distance "C" of approximately 1350 $\mu$m from the periphery of the body of the scraper insert 11. When the insert 11 is housed in the head of the milling cutter, the scraper section 13 extends in a direction substantially radial to the head of the milling cutter, perpendicular to the angular direction of advancement of the insert during rotation of the milling cutter about its own axis.

The scraper section 13 and the cutting element 15 are separated from each other by an inclined section 17 defining a corresponding recess 19.

In the illustrated embodiment, the inclined section 17 extends rectilinearly and with an essentially constant slope of about 2-3°, between the scraper section 13 and the base of the cutting element 15.

Said inclined section 17 and the recess 19 determined by the presence of said inclined section are a result of the machining of the cutting element and contribute to proper operation thereof.

The recess 19 has a maximum depth "H" of about 35 μm relative to the scraper profile 13a of the scraper insert 13.

The recess 19 is formed proximal to the base of the cutting element 15 and has a depth - relative the maximum height of the cutting element 15 - given by the sum of the values of the parameters "A" + "H".

The insert 11 according to this embodiment of the invention further comprises a planar section 21 parallel to the plane of the scraper profile 13a of the scraper section 13 defined adjacent to the cutting element 15 and distal to said periphery of the body of the scraper insert 11.

In addition, still referring to the illustrated embodiment of the invention, a sloping inclined section 23 is defined adjacent to the parallel planar section 21 and distal to said periphery of the body of the scraper insert 11.

In the illustrated embodiment, the scraper section 13, the inclined section 17, the planar section 21 and the inclined sloping section 23 extend along a direction substantially radial to the rotation axis of the milling cutter when the insert 11 is housed in a head of a milling cutter.

Still according to this embodiment of the invention, the cutting element 15 comprises a curved profile in which an angular point 15a is defined, substantially obtained by the combination of a profile having an approximately Gaussian curve on the flank 15b proximal to the scraper profile 13 with an approximately exponential, decreasing profile on the opposite flank 15c.

The geometry of the profile of the cutting element 15 contributes, together with the value of the height "A", to determine the roughness value Rz, taken by a metal surface machined by means of the scraper insert 11.

In the illustrated scraper insert 11, the scraper section 13 is also joined to the adjacent peripheral flank 25, radially distal to the rotation axis of the milling cutter when the insert 11 is housed in the head of the milling cutter, of the insert 11 by a joining section 27 defining a first chamfer 27a and a second chamfer 27b.

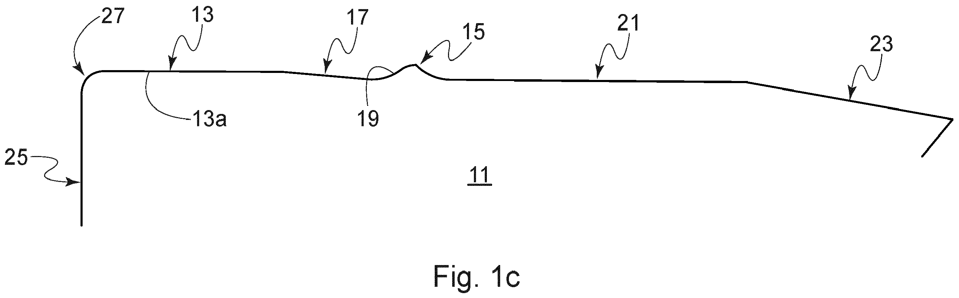

Referring to Fig. 1c, this shows the cutting element according to a variant embodiment of the invention. This variant embodiment differs from the embodiment shown in the previous figures in that the profile of said cutting element 15 takes a substantially bell-like shape, or the shape of a Gaussian curve, or a parabolic shape approximately symmetrical to a median plane perpendicular to the scraper section 13.

Still referring to Fig. 1c, this further shows a variant embodiment of the joining section 27 in which the scraper section 13 is joined to the adjacent peripheral flank 25 y means of a corresponding rounded joining section 27.

Said peripheral flank 25 in the illustrated embodiments is substantially perpendicular to the scraper profile 13a of the scraper section 13.

Referring to Fig. 2, this schematically shows the head 41 of a rotary milling cutter rotating in the direction indicated by arrow "F", provided with a plurality of insert-holders 33, housed in corresponding seats 35. In the figure, a single insert 33 and a single seat 35 are shown, but a head 41 of a rotary milling cutter may be provided for example with nine seats 35, each housing a corresponding insert-holder.

According to the invention, at least one of said insert-holders incorporates an insert 11 made according to the present invention, to provide roughness with the desired roughness parameter Rz by means of the machining carried out by the milling cutter on a workpiece of metal material, for example, cast iron, steel, or aluminum.

**Claims**

1. Scraper insert (11) for a smoothing rotary milling cutter for machining metal materials by stock removal, comprising a scraper section (13) proximal to the radial periphery of the body of the scraper insert (11) when said insert is held by the head (41) of the milling cutter, said radial periphery of the body of the scraper insert (11) corresponding to the portion of the body of the insert (11) that is radially distal to the rotation axis of the milling cutter, when the insert (11) is housed in the head of the milling cutter, and said body of the insert (11) being substantially flat and extending over a plane lying substantially parallel to the rotation axis of the milling cutter, when the insert (11) is housed in the head of the milling cutter, **characterized in that** it comprises a cutting element (15) adjacent to said scraper section (13) and distal to said periphery of the body of the scraper insert (11).

2. Scraper insert (11) according to claim 1, wherein said radial periphery of the body of the scraper insert (11) corresponds to the portion of the body of the insert (11) that is radially distal to the rotation axis of the milling cutter, when the insert (11) is housed in the head of the milling cutter, and wherein said body of the insert (11) is substantially flat and extends over a plane lying substantially parallel to the rotation axis of the milling cutter, when the insert (11) is housed in the head of the milling cutter.

3. Insert according to claim 1 or 2, wherein the cutting element (15) protrudes by a height "A" between 20 μm and 30 μm from the scraper profile or scraping surface (13a) of the scraper section (13).

4. Insert according to claim 1 or 2 or 3, wherein the scraper section (13) and the cutting element (11) are separated by an inclined section (17) defining a corresponding recess (19).

5. Insert according to claim 4, wherein said recess (19) has a maximum depth "H" between 30 $\mu$m and 40 $\mu$m relative to the scraper profile (13a) of the scraper section (13).

6. Insert according to any of claims 1 to 5, wherein a planar section (21) parallel to the scraper profile (13a) of the scraper section (13) is defined adjacent to the cutting element (15) and distal to the periphery of the body of the scraper insert (11).

7. Insert according to claim 6, wherein an inclined sloping section (23) is defined adjacent to the planar section (21) and distal to the periphery of the body of the scraper insert (11).

8. Insert according to any of the preceding claims, wherein the cutting element (15) comprises a curvilinear profile in which an angular point (15a) is defined, obtained by the combination of a profile having an approximately Gaussian curve on the flank (15b) proximal to the scraper profile (13) with an approximately exponential, decreasing profile on the opposite flank (15c).

9. Insert according to any of claims 1 to 7, wherein the cutting element (15) comprises a curvilinear bell-shaped or Gaussian curve-shaped or parabolic profile.

10. Insert according to any of the preceding claims, wherein the scraper section (13a) is joined to the adjacent peripheral flank (25) of the insert (11) by means of a double chamfer (27,29).

11. Rotary milling cutter provided with a plurality of insert-holders (43) housed in corresponding seats (45) arranged along the periphery of the body of the head (41) of the milling cutter, **characterized in that** at least one of said insert-holders (43) incorporates a scraper insert (11) made according to any of claims 1 to 10.

Fig. 1a

Fig. 1b

EP 4 205 891 A1

Fig. 1c

EP 4 205 891 A1

35 33

41

"F"

Fig. 2

y

(t)

x

Fig. 3

Europäisches
Patentamt

European
Patent Office

Office européen
des brevets

## EUROPEAN SEARCH REPORT

Application Number

EP 22 21 7345

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2016/001382 A1 (TAKAHASHI SHOICHI [JP] ET AL) 7 January 2016 (2016-01-07) * figures * ----- | 1 | INV. B23C5/20 |
| A | US 2003/133763 A1 (KURODA YOSHIHIRO [JP] ET AL) 17 July 2003 (2003-07-17) * abstract; figures * ----- | 1 | |
| A | US 2019/118272 A1 (SHIBUYA JYUNICHIRO [JP] ET AL) 25 April 2019 (2019-04-25) * paragraph [0126] - paragraph [0128] * * paragraph [0172] * ----- | 1 | |
| X | JP 2002 254233 A (TOSHIBA TUNGALOY CO LTD) 10 September 2002 (2002-09-10) | 1,2,6,7 | |
| A | * figures * ----- | 3-5,8-11 | |

TECHNICAL FIELDS
SEARCHED      (IPC)

B23C

The present search report has been drawn up for all claims

| Place of search | Date of completion of the search | Examiner |
|---|---|---|
| The Hague | 9 May 2023 | Rabolini, Marco |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.........................................................................
& : member of the same patent family, corresponding
    document

EPO FORM 1503 03.82 (P04C01)

## EP 4 205 891 A1

## ANNEX TO THE EUROPEAN SEARCH REPORT
## ON EUROPEAN PATENT APPLICATION NO.

EP 22 21 7345

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2023

| Patent document cited in search report | | Publication date | Patent family member(s) | | Publication date |
|---|---|---|---|---|---|
| US 2016001382 | A1 | 07-01-2016 | CN | 105290483 A | 03-02-2016 |
| | | | EP | 2965846 A1 | 13-01-2016 |
| | | | JP | 5925250 B2 | 25-05-2016 |
| | | | JP | 2016016468 A | 01-02-2016 |
| | | | KR | 20160005651 A | 15-01-2016 |
| | | | TW | 201615311 A | 01-05-2016 |
| | | | US | 2016001382 A1 | 07-01-2016 |
| US 2003133763 | A1 | 17-07-2003 | EP | 1332820 A1 | 06-08-2003 |
| | | | JP | 3378575 B2 | 17-02-2003 |
| | | | JP | 2002200518 A | 16-07-2002 |
| | | | US | 2003133763 A1 | 17-07-2003 |
| | | | WO | 0234442 A1 | 02-05-2002 |
| US 2019118272 | A1 | 25-04-2019 | CN | 109414767 A | 01-03-2019 |
| | | | JP | 6817717 B2 | 20-01-2021 |
| | | | JP | 2017185601 A | 12-10-2017 |
| | | | US | 2019118272 A1 | 25-04-2019 |
| | | | WO | 2017175440 A1 | 12-10-2017 |
| JP 2002254233 | A | 10-09-2002 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1405248 A
- JP 2002254233 A